# EUROPÄISCHE PATENTSCHRIFT

(11) **EP 0 801 266 B1**
(45) Veröffentlichungstag und Bekanntmachung des Hinweises auf die Patenterteilung: **21.11.2001**
(21) Anmeldenummer: 97201050.8
(22) Anmeldetag: 08.04.1997
(51) Int. Cl.: F23L 17/14, F23L 17/04

(54) **Aufsatz für ein Abgasrohr einer Heizungsanlage**
Cowl for chimney of a heating plant
Chapeau pour cheminée d'une installation de chauffage

(30) Priorität: 10.04.1996 DE 29606539 U
(43) Veröffentlichungstag der Anmeldung: 15.10.1997
(73) Patentinhaber: InterActive Holding B.V., 6942 GT Didam (NL)
(72) Erfinder: Born, Marcel Martine Leonardus, 6836 NN Arnhem (NL)
(74) Vertreter: Mertens, Hans Victor

(56) Entgegenhaltungen:
- EP-A- 0 326 000
- EP-A- 0 349 802
- EP-A- 0 654 638
- EP-A- 0 679 841
- US-A- 4 306 491

## Beschreibung

Die Erfindung betrifft einen Aufsatz für ein Abgasrohr einer Heizungsanlage wie beschrieben im Oberbegriff des Anspruchs 1. Das Abschirmelement kann eine radial nach außen vorstehende Seitenwand und eine Bodenwand umfassen.

Derartige Aufsätze sollen eine möglichst gleichmäßige Abgas-Ausströmung aus dem Abgasrohr auch unter unterschiedlichen Witterungsbedingungen, wie mehr oder weniger starkem Seitenwind gewährleisten, was für einen wirtschaftlichen Heizungsbetrieb wichtig ist. Vor allem bei den mit besonders hohem Wirkungsgrad arbeitenden Brennwert-Heizungsanlagen bilden sich am Aufsatz unter Umständen auch größere Mengen kondensierten Wassers. Bei Außentemperaturen unter dem Gefrierpunkt kann es dann zur Eisbildung im Bereich des Aufsatzes kommen. Dieses verändert die Strömungsbedingungen im Aufsatz; im ungünstigsten Falle kann es zu einem Verschließen von Abgasaustrittsöffnungen kommen.

Die Europäische Patentanmeldung EP 0 679 841 offenbart einen Aufsatz der eingangs beschrieben Art, wobei der Boden des Kondensatauffangelements mit der Unterseite eines Rohrteils verbunden werden kann, das im Abgasrohr ist angebracht. Der Wärmeaustausch findet durch die Verbindung zwischen Rohrteil und Kondensatauffangelement statt.

Der Erfindung liegt die Aufgabe zugrunde, einen Aufsatz für Abgasrohre der eingangs genannten Art bereitzustellen mit verminderter Vereisungsgefahr. Diese Aufgabe wird dadurch gelöst, daß das Wärmeaustauschteil mit dem Kondensatauffangelement ein einstückiges Teil bildet.

Bei Heizungsanlagen mit besonders niedriger Abgastemperatur kann alternativ oder zusätzlich zur Beheizung von den Abgase noch eine elektrische Heizung vorgesehen sein zur Vermeidung von Eisbildung unter allen Umständen. Dazu wird die Aufgabe der Erfindung auch dadurch gelöst, daß das Kondensatauffangelement mit wenigstens einem Heizelement versehen ist.

Bevorzugt ist die Ausbildung des Kondensatauffangelements mit elektrischer Heizung bzw. deren Heizung von den Abgase, da das Kondensatauffangelement zumindest bereichsweise außerhalb des direkten Abgasstroms liegt. Überdies befinden sich in vielen Fällen gerade zwischen dem Kondensatauffangelement und dem Abschirmelement zumindest einige der Abgasaustrittsöffnungen bzw. Frischluftzufuhröffnungen, so daß eine bislang mögliche Vereisung des Kondensatauffangelements zu einem Verschließen gerade dieser Öffnungen führt.

Bevorzugt besteht das Kondensatauffangelement aus gut wärmeleitfähigem Material, wie beispielsweise Aluminium.

Um eine zuverlässige Beheizung des Kondensatauffangelements durch den Abgasstrom zu erreichen, wird vorgeschlagen die Abgase durch ein Wärmeaustausch-Teil des Kondensatauffangelements, vorzugsweise einen Bund, zu leiten. Es ist auch möglich, das Kondensatauffangelement am Abgasrohr anzubringen, insbesondere durch Aufstecken an das obere Rohrende, ggf. zusätzlich mit Sicherung durch wenigstens eine Befestigungsschraube.

Das Abschirmelement weist zumeist deutlich größeren Durchmesser auf, wie das Abgasrohr, um zusammen mit den z. B. am oberen und am unteren Rand des Abschirmelements gebildeten Abgasaustrittsöffnungen weitgehend konstanten Ausströmwiderstand für das Abgas auch unter unterschiedlichsten Witterungsbedingungen, insbesondere Windgeschwindigkeiten sicherzustellen. Vor allem bei Brennwert-Heizungsanlagen mit ihren niedrigen Abgastemperaturen im Bereich zwischen 50° und 60° ergibt sich eine besonders hohe Luftfeuchtigkeit des Abgases, welches dementsprechend zu relativ starker Kondensatbildung an dem vergleichsweise kalten Abschirmelement führt. Um eine Eisbildung an dem Abschirmelement zuverlässig zu verhindern, wird vorgeschlagen, daß das Abschirmelement mit dem Kondensatauffangelement thermisch verkoppelt ist. Hierzu kann das Abschirmelement über Stege mit einem zentralen Bund verbunden sein, welcher vom Abgas durchströmt wird.

In das Kondensatauffangelement kann wenigstens ein Heizelement eingesetzt werden. Zur Steuerung der Temperatur des Heizelements kann das Kondensatauffangelement mit wenigstens einem Temperatursensor versehen sein. Es ist auch denkbar, Heizelemente einzusetzen, die einen mit fallender Temperatur fallenden elektrischen Widerstand aufweisen, so daß auf die Steuerung bzw. Regelung durch einen Temperatursensor verzichtet werden kann.

Viele Heizungsanlagen, insbesondere ein Großteil der Brennwert-Heizungsanlagen, erlaubt die Kondensatrückführung in das Abgasrohr. Für diesen Fall wird zusätzlich, aber auch unabhängig von den vorstehend beschriebenen Maßnahmen vorgeschlagen, das Kondensatauffangelement so auszubilden, daß sie das Kondensat nach innen in das Abgasrohr leitet. Die Vereisungsgefahr ist somit von vornherein deutlich reduziert.

Hierzu kann vorgesehen sein, daß die Kondensatauffangfläche schräg nach innen verläuft und unmittelbar oder über wenigstens einen Verbindungskanal in das Abgasrohr mündet.

Man erhält gleichzeitig mechanisch stabilen Aufbau des Aufsatzes, wenn das Kondensatauffangelement an ihrem Innenumfang mit einem nach oben abstehenden, Einlauföffnungen aufweisenden Bund versehen ist.

Bei Heizungsanlagen, die eine Kondensatrückführung nicht zulassen, wird vorgeschlagen, daß das Kondensatauffangelement das Kondensat nach außen leitet.

Die Kondensatauffangfläche fängt bevorzugt von der Seitenwand des Abschirmelements sowie von einem ggf. vorgesehenen Dachelement des Abschirmelements abtropfendes Kondensat auf.

Hierzu ist bevorzugt vorgesehen, daß das Dachelement mit mindestens einer vorzugsweise im wesentlichen ringförmigen Abtropfkante im Bereich oberhalb der Kondensatauffangfläche oder oberhalb der Innenumfangsfläche der Seitenwand ausgebildet ist.

Für den Fall, daß eine Kondensatrückführung zulässig ist, kann das Dachelement mit einem Abtropfbereich oberhalb des Abgasrohrs ausgebildet sein. Eine Rückführung des Kondensats vom Dachelement über die Innenumfangsfläche der Seitenwand bzw. die Kondensatauffangfläche des Kondensatauffangelements ist prinzipiell auch möglich, wenn auch weniger bevorzugt, da dann unter Umständen eine höhere Heizleistung zur Vermeidung von Vereisung erforderlich ist.

Der Abtropfbereich wird bevorzugt von einer nach unten gerichteten Kegelspitze des Dachelements gebildet.

Die Erfindung betrifft ferner einen Bausatz für eine Dachdurchführung eines Abgasrohres einer Heizungsanlage, umfassend einen Aufsatz, wie vorstehend beschrieben. Um mit geringem Aufwand die Dachdurchführung an unterschiedliche Gegebenheiten anpassen zu können, nämlich an Heizgeräte mit oder ohne Kondensatrückführung sowie ein Heizgerät mit oder ohne Dachelement am Abgasrohrende, wird vorgeschlagen, den Aufsatz mit einem Kondensatauffangelement, einer mit dieser verbindbaren gesonderten Seitenwand und einem gesonderten, mit der Seitenwand und/oder dem Kondensatauffangelement verbindbaren Dachelement auszubilden, wobei wahlweise ein Kondensatauffangelement mit Kondensatableitung nach innen in das Abgasrohr oder ein Kondensatauffangelement mit Kondensatableitung nach außen einsetzbar ist und wobei wahlweise das Dachelement weggelassen werden kann. Gleichbleibend ist somit für alle Varianten die gesonderte Seitenwand, die an ihrem oberen Ende mit einer Befestigungseinrichtung für das Dachelement, insbesondere in Form eines äußeren Halterings versehen sein kann und an ihrem unteren Ende mit Anbringungsmitteln zur Verbindung mit dem Kondensatauffangelement, insbesondere in Form von Verbindungsstegen und einem zentralen Bund für die verschiedenen Anbauvarianten. Unverändert sind auch die ggf. vorgesehene weitere Elemente der Dachdurchführung wie ein erster Außenrohrabschnitt zur Rückführung von Frischluft im Ringraum zwischen Abgasrohrabschnitt und Außenrohrabschnitt, ein nach unten offenes Haubenelement, welches das obere Ende des Abgasrohrabschnitts mit den Kondensatauffangelement verbindet sowie ggf. ein sich an den ersten Außenrohrabschnitt anschließender zweiter Außenrohrabschnitt und ein auf dieses folgendes Abzweigelement.

Die Verbindung zwischen dem Haubenelement und dem Kondensatauffangelement ist thermisch isolierend, damit sich das Haubenelement von billigen Kunststoff herstellen laßt, wenn auch das Kondensatauffangelement erwärmt wird. Zur Kühlung des oberen Endes des Haubenelements kann zusätzlich zwischen dem oberen Ende des Haubenelements und dem Kondensatauffangelement eine Luftzutrittsöffnung vorgesehen sein.

Je nachdem, ob eine Kondensatrückführung erlaubt ist oder nicht, kann auch entweder ein Dachelement mit Abtropfbereich oberhalb des Abgasrohres oder ein Dachelement mit einer Abtropfkante im Bereich oberhalb der Kondensatauffangfläche des Kondensatauffangelements eingesetzt werden.

Im Falle einer Heizungsanlage ohne die Möglichkeit der Kondensatrückführung wird vorgeschlagen, wenigstens im Bereich außerhalb des Dachs einen thermisch isolierten Abgasrohrabschnitt einzusetzen. Dies vermeidet Kondensatbildung an der Innenseite des Abgasrohrabschnitts. Um dies zu erreichen, kann der Abgasrohrabschnitt eine außen aufgeschäumte Isolierschicht aufweisen oder mit einer gesonderten Isolierschicht ummantelt sein. Der Abgasrohrabschnitt kann auch zur thermischen Isolierung doppelwandig ausgelegt sein.

Die Erfindung wird im folgenden an bevorzugten Ausführungsbeispielen erläutert. Es zeigt:
- Figur 1: eine seitliche Gesamtansicht einer Dachdurchführung für ein Abgasrohr einer Heizungsanlage;
- Figur 2: einen Vertikalschnitt eines Aufsatzes der Dachdurchführung gemäß Figur 1 mit (linke Bildhälfte) bzw. ohne (rechte Bildhälfte) Heizelement mit Kondensatableitung nach innen und aufgesetztem Deckelteil vor der Verrastung;
- Figur 3: eine Draufsicht auf die Anordnung in Figur 2, wobei die untere Bildhälfte weggelassen ist;
- Figur 4: einen Vertikalschnitt einer weiteren Ausführungsform des Aufsatzes mit Kondensatableitung nach außen und aufgesetztem, abgewandelten Dekkelteil nach der Verrastung;
- Figur 5: eine Draufsicht auf die Anordnung in Figur 4, wobei die untere Bildhälfte wiederum weggelassen ist; und
- Figuren 6 bis 8: drei Varianten eines thermisch isolierten oberen Abgasrohrabschnitts.

Bei modernen Heizungsanlagen, die mit hohem Wirkungsgrad und damit mit relativ niedrigen Abgastemperaturen arbeiten, muß auf gleichmäßigen Abgasstrom geachtet werden, unabhängig von äußeren Witterungseinflüssen, wie starken Seitenwinden. Aufgrund der niedrigen Abgastemperatur ergibt sich unter Umständen ein erhöhter Kondensatanfall im Bereich des Abgasrohres sowie eines Aufsatzes am Abgasrohrende oberhalb des Dachniveaus. Einige Anlagentypen von Heizungsanlagen erlauben die Kondensatrückführung, andere nicht. Bei Außentemperaturen unter 0° besteht die Gefahr, daß es zumindest im Bereich des Aufsatzes zu Vereisungen kommt, was den Betrieb der Heizungsanlagen aufgrund der veränderten Ausströmbedingungen wesentlich beeinträchtigen kann.

Im folgenden wird ein Aufsatz sowie ein diesen Aufsatz umfassender Bausatz für eine Dachdurchführung erläutert mit Anpaßmöglichkeit an die unterschiedlichen Anfordernisse bei gebräuchlichen Heizungsanlagen.

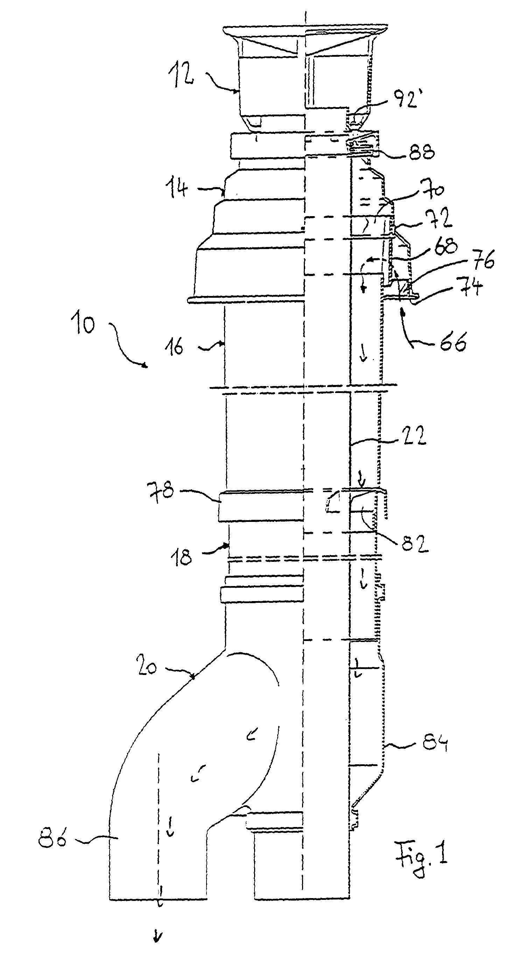

So zeigt die in Figur 1 insgesamt dargestellte Dachdurchführung 10 eine Ausführungsform, die für eine Heizungsanlage mit Kondensatrückführmöglichkeit gedacht ist. Sie besteht von oben nach unten aus einem Aufsatz 12, einem Haubenelement 14, einem dachaußenseitigen Außenrohrabschnitt 16, einem dachinnenseitigen Außenrohrabschnitt 18, einem Abzweigelement 20 sowie einem in Figur 1 durchgehenden, ein Innenrohr bildenden Abgasrohr 22.

Der das Abschirmelement (24, 36) und das Kondensatauffangelement (28) umfassenden Aufsatz 12 wiederum besteht aus drei Teilen, einem in allen Ausführungsformen gleichen Seitenwandelement 24, einem wahlweise einsetzbaren und in wenigstens zwei Varianten vorliegenden Dachelement 26 sowie einer in wenigstens drei Varianten einsetzbaren Bodenwand 28. Das Kondensatauffangelement 28 besteht bevorzugt aus gut wärmeleitendem Material, insbesondere Metall, am besten Aluminium, um während des Betriebes eine gute Erwärmung zu erzielen, damit die Vereisungsgefahr minimiert wird.

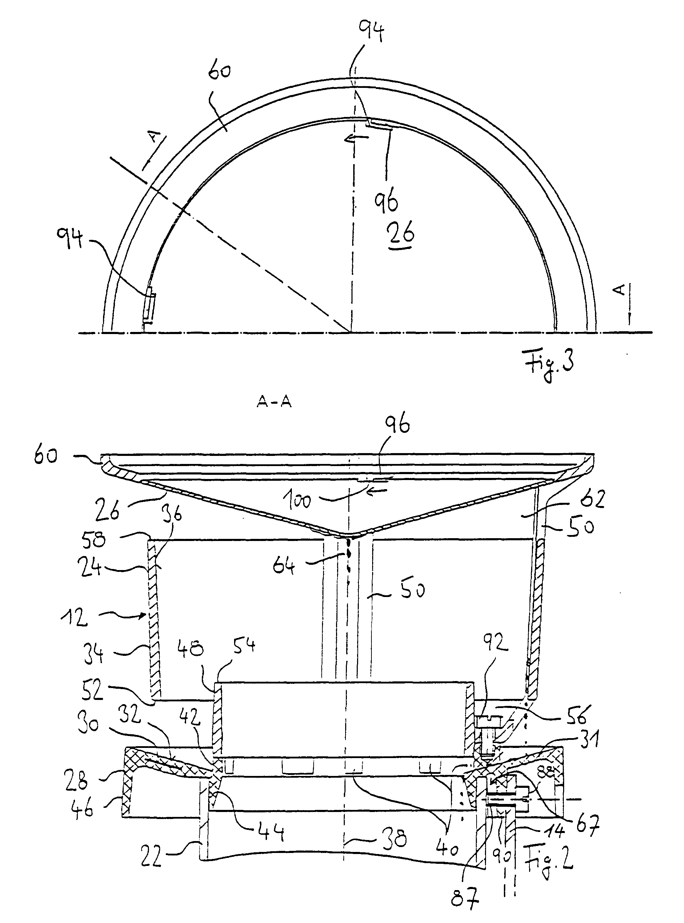

Als zusätzliche Maßnahme kann der Aufsatz 12 elektrisch beheizbar sein. Man erkennt in Figur 2, linke Hälfte ein Heizelement 30, welches in dem Kondensatauffangelement 28 eingebaut ist und zwar unterhalb einer Kondensatauffangfläche 32 an der Oberseite des Kondensatauffangelements 28. Die Kondensatauffangfläche 32 befindet sich unterhalb einer angenähert zylindrischen, sich nach unten geringfügig verjüngenden Seitenwand 34 des Seitenwandelements 24, so daß an der Innenseite 36 der Seitenwand 34 gebildetes Kondensat von der Kondensatauffangfläche 32 aufgefangen wird.

Das Kondensatauffangelement 28 ist, wie bereits erwähnt, für eine Heizungsanlage bestimmt, die eine Kondensatrückführung erlaubt. Das von der Kondensatauffangfläche 32 aufgefangene Kondensat wird daher in das Abgasrohr 22 rückgeführt. Die Kondensatauffangfläche 32 ist hierzu derart konisch (zentrisch zur Abgabsrohrachse 38) geneigt, daß das Kondensat radial nach innen fließt, um dann durch Verbindungskanäle in Form von Einlauföffnungen 40 in einem nach oben abstehenden zylindrischen Bund 42 des Kondensatauffangelements 28 in das Abgasrohrinnere geleitet zu werden.

Der Bund 42 setzt sich nach unten in einem zylindrischen Abschnitt 44 fort, der an der Innenseite am oberen Ende des Abgasrohrs 22 anliegt und damit guten thermischen Kontakt zum Abgasrohr 22 herstellt. Zudem werden der Bund 42 und der Abschnitt 44 durch das Abgas erwärmt.

Am radial äußeren Rand der Kondensatauffangfläche 32 ist das Kondensatauffangelement 28 mit einem nach unten abstehenden im wesentlichen zylindrischen Bund 46 versehen, der in erster Linie der mechanischen Aussteifung dient.

Das Abschirmelement 24 weist an seinem unteren Ende einen zylindrischen Bund 48 mit gleichem Innen- und Außendurchmesser wie der Bund 42 auf, auf den er aufgesetzt ist. Vom Bund 48 gehen insgesamt vier Stege 50 aus, die auf den Umfang verteilt sind und vom Bund 48 zuerst radial nach außen weglaufen, dann nach einem Knick schräg nach oben, um dann mit der Seitenwand 34 integriert zu werden zur Halterung der Seitenwand 34 am Bund 48.

Die Seitenwand des Abschirmelements 34 hat einen Innendurchmesser, der den Innendurchmesser des Bunds 48 wie auch des Abgasrohrs 22 deutlich übersteigt. Der untere Rand 52 der Seitenwand 34 befindet sich etwas unterhalb des oberen Randes 54. Hierdurch erhält man insgesamt vier Luftströmungsöffnungen 56, die jeweils durch zwei benachbarte Stege 50 sowie die Ränder 52 und 54 begrenzt sind. Je nach den jeweiligen Strömungsverhältnissen kann durch diese Luftströmungsöffnungen 56 Frischluft eintreten zur Vermischung mit dem Abgas oder es kann Abgas durch diese Luftströmungsöffnungen 56 abfließen.

Die vier Stege 50 setzen sich am oberen Rand 58 der Seitenwand 35 fort und enden in einem Haltering 60 für das jeweilige Dachelement 26. Auf diese Weise werden vier weitere Luftströmungsöffnungen gebildet, die Abgasaustrittsöffnungen 62 darstellen.

Das Dachelement 26 läuft nach unten konisch zu, so daß an seiner Unterseite gebildetes Kondensat 64, wie in Figur 2 angedeutet, an der Kegelspitze abtropft, also zentrisch zur Achse 38. Da, wie ebenfalls in Figur 2 rechts angedeutet, das an der Innenfläche 36 der Seitenwand 34 gebildete Kondensat über die Kondensatauffangfläche 32 und die Einlauföffnungen 40 in das Innere des Abgasrohrs 22 abgeleitet wird, fließt das gesamte Kondensat in das Abgasrohr 22 zurück.

Der Zusammenbau der in Figur 1 insgesamt dargestellten Dachdurchführung 10 gestaltet sich besonders einfach, da die Einzelteile im wesentlichen lediglich zusammengesteckt werden brauchen. Über wenigstens vier in Figur 1 angedeutete, nach oben abstehende Verbindungsstege 68, die in einem Haltering 70 enden, ist der Außenrohrabschnitt 16 mit dem Haubenelement 14 verbunden (hier mit Hilfe von Rastnocken 72 am Außenumfang des Halterings 70, die in entsprechende Rastöffnungen des Haubenelements 14 einrasten). Dabei bietet die Dachdurchführung 10 die Möglichkeit der Frischluftzufuhr zur Heizungsanlage. Die Frischluftströmung ist durch Strömungspfeile 66 symbolisiert. Der Lufteintritt erfolgt durch einen Ringraum zwischen dem unteren Ende des Haubenelements 14 und dem oberen Ende des Außenrohrabschnitts 16 an den Verbindungsstegen vorbei.

An seinem unteren Rand kann das Haubenelement 14 mit einem Verstärkungsring 74 ausgesteift sein, der hierzu zusätzlich mit in Figur 1 angedeuteten Versteifungswinkeln 76 versehen sein kann.

Für einen dichten Dachabschluß kann der Außenrohrabschnitt 16 mit einer Schürze 78 ausgebildet sein - das Dachniveau liegt mindestens 15 cm unterhalb der Schürze 78. Mit dem nachfolgenden dachinnenseitigen Außenrohrabschnitt 18 ist der Abschnitt 16 über eine übliche Steckverbindung verbunden. Zur gegenseitigen Zentrierung von Abgasrohr 22 und den beiden Abschnitten 16 und 18 kann beispielsweise der Abschnitt 16 im Bereich der Schürze 78 mit radial nach innen vorstehenden Zentrierlappen 82 ausgebildet sein, die am Außenumfang des Abgasrohrs 22 anliegen.

Ebenfalls über eine Steckverbindung ist das untere Ende des dachinnenseitigen Außenrohrabschnitts 18 mit einem Abzweigelement 20 verbunden. Das Abzweigelement 20 ist am unteren Ende seines Zentralabschnitts 84 gegen das Abgasrohr 22 durch eine in Figur 1 nicht dargestellte Lippendichtung abgedichtet. Eine entsprechende Lippendichtung kann auch zwischen dem oberen Ende des Zentralabschnitts 84 und dem unteren Ende des Außenrohrabschnitts 18 eingebaut sein. Ein abzweigendes Rohrstück 86 des Abzweigelements 20 ist in nicht dargestellter Weise mit einem zur Heizungsanlage führenden Frischluftrohr verbunden.

Im Rahmen der Erfindung liegt selbstverständlich auch noch eine durchgehend zentrische Frischluftführung bis zur Heizungsanlage, d. h. ohne Abzweigung mit Hilfe des Abzweigelements 20. Schließlich kann auch auf eine Frischluftzuführung über die Dachdurchführung je nach Heizungsanlagenbauart verzichtet werden.

Zur starren Befestigung von Haubenelement 14 und Aufsatz 12 am oberen Ende des Abgasrohrs 22 sind mehrere von einem Isolierring 87 umgebene Befestigungsschrauben 88 vorgesehen, von denen eine in den Figuren 1 und 2 angedeutet ist. Sie durchsetzt sowohl einen oberen Rand des Haubenelements 14 als auch einen nach unten ragenden Steg 90 des Kondensatauffangelements 28, wobei Rand und/oder Steg 90 mit einem entsprechenden Innengewinde versehen sind, damit die Befestigungsschrauben 88 zur klemmenden Anlage am Außenumfang des Abgasrohrs 22 eingeschraubt werden kann.

Der starren Verbindung von Kondensatauffangelement 28 und Abschirmelement 24 dienen wiederum Befestigungsschrauben 92, von denen eine in Figur 2 angedeutet ist.

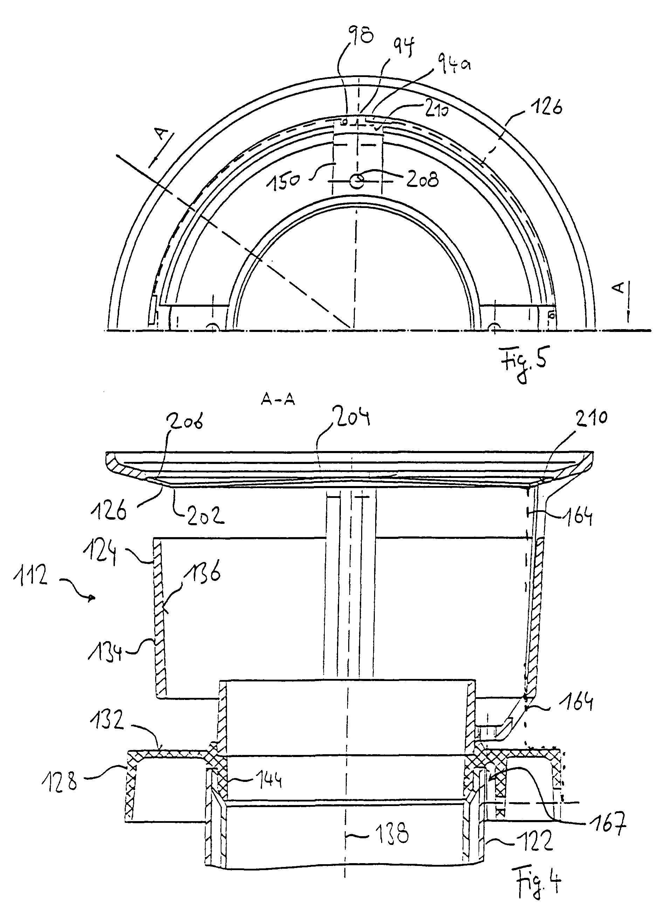

Das Dachelement 26 ist über eine Art Bajonettverbindung mit dem Seitenwandteil 24 verbunden. Hierzu sind am Außenumfang des Dachelements 26 beispielsweise vier Bajonettausnehmung 94 ausgebildet, die in der Aufsetzstellung gemäß Figuren 2 und 3 an radial nach innen vorstehenden Bajonettvorsprüngen 96 des Halterings 60 vorbeibewegt werden, bis der äußere Rand des Dachelements 26 auf den Oberseiten (210 in Figur 4 und 5) der in diesem Bereich abgewinkelten Stege 50 aufliegt. Anschließend wird das Dachelement im Gegenuhrzeigersinn der Figur 3 solange verdreht, bis jeweils ein in Figur 5 erkennbarer von der Oberseite des jeweiligen Stegs 50 nach oben abstehender Rastnoppen 98 in die Bajonettausnehmung 94 einrastet. Der vom Rastnoppen 94 abgelegene Rand 94a der Bajonettausnehmung 94 befindet sich dann unterhalb des radial nach innen vorstehenden Bajonettvorsprungs 96 und schlägt dort an einem vom Bajonettvorsprung 96 nach unten abstehenden Vorsprung 100 an. Das Dachelement 26 ist somit gegen ein Rückdrehen gesichert zur zuverlässigen starren Befestigung am Seitenwandelement 24.

Wie bereits angesprochen, kann, je nach den Klimabedingungen sowie den zu erwartenden Abgastemperaturen, mit oder ohne gesonderter elektrischer Heizung in der Bodenwand 28 gearbeitet werden. Für den Fall der elektrischen Beheizbarkeit kann aus Sicherheitsgründen eine Niederspannungsheizung vorgesehen sein. Es kann eine Temperaturregelung mittels einem Temperatursensor 31 eingesetzt werden. Man kann aber auch, wie bei Dachrinnenabläufen bekannt, Heizelemente einsetzen, die einen positiven Temperatur-Widerstands-Koeffizienten aufweisen, so daß nur bei entsprechend tiefen Temperaturen mit entsprechend geringem elektrischem Widerstand Heizstrom fließt.

In den Figuren 4 und 5 ist eine Variante des Aufsatzes dargestellt, die für Heizungsanlagen ohne Kondensatrückführung bestimmt ist. Bauelemente, die ihrer Funktion nach solchen in den vorhergehenden Figuren entsprechen, sind mit denselben Bezugsziffern, jeweils vermehrt um die Zahl 100 versehen. Im folgenden werden lediglich die Unterschiede behandelt. Im übrigen wird auf die vorstehenden Ausführungen zu den Figuren 1 bis 3 verwiesen.

Der das Abschirmelement und das Kondensatauffangelement umfassenden Aufsatz 112 besteht demnach wiederum aus den drei gesonderten Teilen Kondensatauffangelement 128, Seitenwandelement 124 und Dachelement 126. Das Seitenwandelement 124 ist genau baugleich mit dem Seitenwandelement 24. Das Kondensatauffangelement 128 ist jedoch zur Kondensatableitung radial nach außen ausgebildet, so daß also zum einen die Einlauföffnungen 40 entfallen und zum anderen keine konische Abschrägung der Kondensatauffangfläche 132 vorgesehen ist, sondern eine durchgehend ebene Ausbildung in horizontaler Ebene (senkrecht zur Achse 138 des Abgasrohrs 122). Das von der Innenseite der Seitenwand 134 abtropfende Kondensat 164 fließt wie in Figur 4 recht angedeutet, nach dem Auftropfen auf der Kondensatauffangfläche 132 radial nach außen. Das hier zur Vermeidung von Kondensatrückfluß notwendigerweise vorzusehende Dachelement 126 ist mit einer im wesentlichen ringförmigen Abtropfkante 202 versehen, die zentrisch zur Achse 138 angeordnet ist und einen derartigen Durchmesser aufweist, daß von ihr abtropfendes Kondensat 164 entweder direkt oder nach Auftreffen auf die Innenseite 136 der Seitenwand 124 auf die Kondensatauffangfläche 132 des Kondensatauffangelements 128 auftrifft. Zur Bildung dieser Kante 202 kann das Dachelement 126 mit einem inneren, nach oben gewölbten Konusabschnitt 204 ausgebildet sein, dessen Außenrand im Bereich der Kante 202 in einen entgegengesetzt gewölbten Konusringabschnitt 206 übergeht. Dies ergibt bei einfacher Fertigung ausreichende mechanische Stabilität.

Zwischen dem oberen Ende des Haubenelements und dem Kondensatauffangelement ist eine Luftzutrittsöffnung 67 (Fig. 2) bzw. 167 (Fig. 4) vorgesehen zur Kühlung des oberen Endes des Haubenelements vom Frischluft.

Zur Befestigung des Dachelements 126 am Seitenwandelement 124 ist wiederum die bereits beschriebene Bajonettverbindung vorgesehen. In Figur 5 ist zur Verdeutlichung des Aufbaus der Umriß des Dachelements 126 in seiner Bajonett-Raststellung lediglich mit unterbrochener Umrißlinie angedeutet. Man erkennt demnach die Stege 150 mit Durchtrittsöffnungen 208 jeweils für die in Figur 2 mit 92 bezeichnete Befestigungsschraube oder für einen mit dem Kondensatauffangelement 28 integral ausgebildeten Stift 92' mit Rastkopf (wie in Figur 1 angedeutet). Ferner ist die Auflagefläche 210 am oberen Stegende für den Umfangsrand des Dachelements 126 angedeutet.

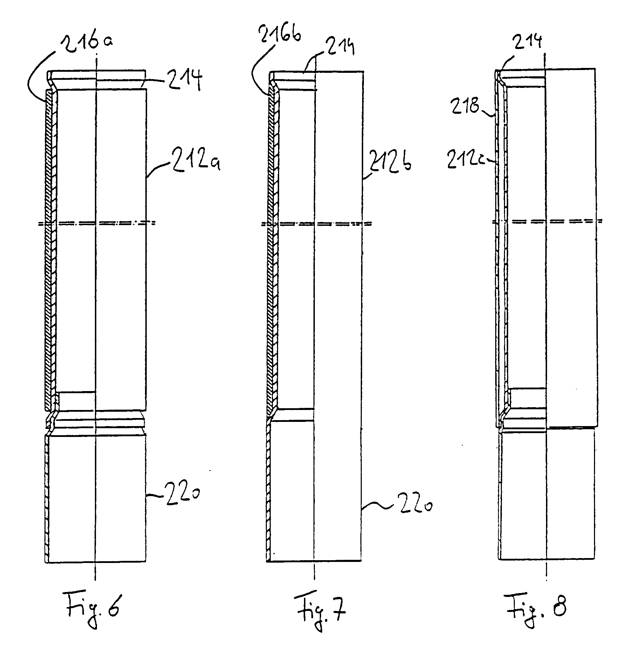

Um eine Kondensatrückführung von Kondensat zu vermeiden, welche sich am Innenumfang des jeweiligen Abgasrohrabschnitts oberhalb des Dachs bei entsprechend niedriger Abgasrohrtemperatur und hoher Abgasfeuchtigkeit bilden kann, kann ein thermisch isolierter Abgasrohrabschnitt eingesetzt wird, wie dieser in drei Ausführungsbeispielen in den Figuren 6 bis 8 dargestellt ist und dort mit 212a, 212b, 212c bezeichnet ist.

Gemäß Figur 6 wird das in der Regel metallische Rohr 214 mit einer gesonderten Isolierschicht 216a ummantelt. Gemäß Figur 7 kann die Isolierschicht 216b auch unmittelbar auf das Rohr 214 aufgeschäumt sein. Gemäß Figur 8 kommt auch eine doppelwandige Ausbildung in Frage aus dem bereits erwähnten inneren Rohr 214 und einem Außenrohr 218.

Um durchgehend gleichmäßigen Außendurchmesser des Abgasrohrabschnitts 212a, 212b und 212c sowie eines vorangegangenen (nicht thermisch isolierten) Abgasrohrabschnitts 220 zu erhalten, kann das Rohr 214 an seinen beiden Enden jeweils zweifach abgestuft (Z-förmiger Querschnitt) ausgebildet sein entsprechend der jeweils gewünschten Wanddicke der Isolierschicht 216a bzw. 216b bzw. entsprechend der gewünschten Radialabmessung des Isolier-Ringraums zwischen Rohr 214 und Außenrohr 218.

In Figur 4 erkennt man das obere Ende des Abgasrohrabschnitts 212c gemäß Figur 8. Ferner ist ersichtlich, daß der zylindrische Abschnitt 144 an die Rohrform angepaßt ist.

Wie in Figur 7 angedeutet ist, kann auch ein durchgehend ausgebildetes Abgasrohr eingesetzt werden mit thermisch isoliertem Abschnitt 212b und nicht isoliertem Abschnitt 220.

Mit den voranstehend beschriebenen, zum Teil identischen und zum Teil in Varianten vorliegenden Bauelementen einer Dachdurchführung 10 kann nach Art eines Bausatzes je nach Zusammenstellung jeweils eine Dachdurchführung für die unterschiedlichsten Gegebenheiten zusammengestellt werden. So kann wahlweise ein Aufsatz mit Dachelement 26 gemäß Figuren 2 und 3 oder mit Dachelement 126 gemäß Figuren 4 und 5 eingesetzt werden oder ein Aufsatz ganz ohne Dachelement. Als Kondensatauffangelement kommt je nachdem, ob Kondensatrückführungsmöglichkeit besteht oder nicht, das Kondensatauffangelement 28 gemäß Figur 2 mit oder ohne Heizelement in Frage oder das Kondensatauffangelement 128 gemäß Figur 4. Vor allem dann, wenn keine Kondensatrückführungsmöglichkeit besteht, kann anstelle eines üblichen nicht isolierten Abgasrohres zumindest derjenige Abschnitt des Abgasrohres oberhalb des Daches durch einen thermisch isolierten Abgasrohrabschnitt entsprechend den Figuren 6 bis 8 ersetzt werden. Die übrigen Elemente des Bausatzes, insbesondere das Abschirmelement 24 bzw. 124, das Haubenelement 14, die Außenrohrabschnitte 16 und 18 sowie das Abzweigelement 20, sind jeweils unverändert.

## Patentansprüche

1. Aufsatz (12, 112) für ein Abgasrohr (22, 122) einer Heizungsanlage, mit einem wenigstens bereichsweise oberhalb des Abgasrohrs (22, 122) angeordneten und wenigstens eine Abgasaustrittsöffnung (62) festlegenden Abschirmelement (26, 126, 34, 134), und mit einem unterhalb des Abschirmelements (26, 126, 34, 134) außerhalb des Abgasrohrs (22, 122) angeordneten Kondensatauffangelement (28, 128), dessen Oberseite mit einer Kondensatauffangfläche (32, 132) für an dem Abschirmelement (34, 134) gebildetes Kondensat (64, 164) ausgebildet ist, wobei das Kondensatauffangelement (28, 128) ein Wärmeaustauschteil (42) aufweist und während des Betriebes durch die durch das Wärmeaustauschteil (42) geleiteten Abgase beheizt wird,
**dadurch gekennzeichnet,**
**daß** das Wärmeaustauschteil (42) mit dem Kondensatauffangelement (28, 128) ein einstückiges Teil bildet.

2. Aufsatz (12, 112) nach Anspruch 1, **dadurch gekennzeichnet, daß** das Wärmeaustauschteil (42) von einem nach oben abstehenden Bund gebildet wird.

3. Aufsatz (12, 112) nach Anspruch 2, **dadurch gekennzeichnet, daß** der Bund (42) sich nach unten in einem zylindrischen Abschnitt (44) fortsetzt, der an der Innenseite am oberen Ende des Abgasrohrs (22) anliegt.

4. Aufsatz (12, 112) nach einem der vorhergehenden Ansprüche,
**dadurch gekennzeichnet,**
**daß** das Kondensatauffangelement (28, 128) mit wenigstens einem elektrischen Heizelement (30) versehen ist.

5. Aufsatz (12, 112) nach einem der vorgehenden Ansprüche, **dadurch gekennzeichnet, daß** das Kondensatauffangelement (28, 128) aus einem gut wärmeleitfähigen Material, wie Metall, besteht.

6. Aufsatz (12, 112) nach einem der vorhergehenden Ansprüche, **dadurch gekennzeichnet, daß** das Kondensatauffangelement (28, 128) mit dem Abgasrohr (22, 122) thermisch verkoppelt ist.

7. Aufsatz (12, 112) nach einem der vorhergehenden Ansprüche, **dadurch gekennzeichnet, daß** das Abschirmelement (34, 134) mit dem Kondensatauffangelement (28, 128) thermisch verkoppelt ist.

8. Aufsatz (12, 112) nach einem der vorhergehenden Ansprüche, **dadurch gekennzeichnet, daß** das Kondensatauffangelement (28, 128) mit wenigstens einem Temperatur-Sensor (31) versehen ist.

9. Aufsatz (12) nach einem der vorhergehenden Ansprüche, **dadurch gekennzeichnet, daß** das Kondensatauffangelement (28) das Kondensat (64) nach innen in das Abgasrohr (22) leitet.

10. Aufsatz (12) nach Anspruch 9, **dadurch gekennzeichnet, daß** die Kondensatauffangfläche (32) schräg nach innen verläuft, und unmittelbar oder über wenigstens einen Verbindungskanal (40) in das Abgasrohr (22) mündet.

11. Aufsatz (12) nach Anspruch 2 und 10, **dadurch gekennzeichnet, daß** der Bund (42) des Kondensatauffangelements (28) Einlauföffnungen (40) aufweist.

12. Aufsatz (112) nach einem der Ansprüche 1 bis 8, **dadurch gekennzeichnet, daß** das Kondensatauffangelement (128) das Kondensat (164) nach außen leitet.

13. Aufsatz (12, 112) nach einem der vorhergehenden Ansprüche, **dadurch gekennzeichnet, daß** das Abschirmelement (26, 126, 34, 134) eine radial nach außen vorstehender Seitenwand (34, 134) enthalt, und daß die Kondensatauffangfläche (32, 132) von der Seitenwand (34, 134) abtropfendes Kondensat (164) auffängt.

14. Aufsatz (112) nach einem der vorhergehenden Ansprüche, **dadurch gekennzeichnet, daß** das Abschirmelement (126, 134) ein Dachelement (126) enthält, und daß die Kondensatauffangfläche (132) vom Dachelement (126) abtropfendes Kondensat (164) auffängt.

15. Bausatz für eine Dachdurchführung (10) eines Abgasrohrs (22, 122) einer Heizungsanlage, umfassend einen Aufsatz (12, 112) nach einem der vorhergehenden Ansprüche mit einem Kondensatauffangelement (28, 128), einer mit diesem verbindbaren gesonderten Seitenwand (34, 134) und einem gesondert mit der Seitenwand (34, 134) und/oder dem Kondensatauffangelement (28, 128) verbindbaren Dachelement (26, 126), wobei wahlweise ein Kondensatauffangelement (28) mit Kondensatableitung nach innen in das Abgasrohr (22) oder ein Kondensatauffangelement (128) mit Kondensatableitung nach außen einsetzbar ist und wobei wahlweise das Dachelement (26, 126) weggelassen werden kann.

16. Bausatz nach Anspruch 15, **dadurch gekennzeichnet, daß** wenigstens im Bereich außerhalb des Daches wahlweise ein thermisch isolierter Abgasrohrabschnitt (212a, 212b, 212c) einsetzbar ist.

17. Bausatz nach Anspruch 16, **dadurch gekennzeichnet, daß** der Abgasrohrabschnitt (212c) doppelwandig ausgelegt ist.

18. Bausatz nach Anspruch 16, **dadurch gekennzeichnet, daß** der Abgasrohrabschnitt (212a, 212b) eine aufgeschäumte Isolierschicht (216a, 216b) aufweist, vorzugsweise mit der Isolierschicht (216a) ummantelt ist.

19. Bausatz nach einem der Ansprüche 15 bis 18, **dadurch gekennzeichnet, daß** ein erster Außenrohrabschnitt (16) zur Führung von Frischluft (66) im Ringraum zwischen Abgasrohrabschnitt (22, 122) und Außenrohrabschnitt (16) vorgesehen ist, und daß das obere Ende eines nach unten offenen Haubenelements (14) mit dem Kondensatauffangelement (28, 128) verbunden ist.

20. Bausatz nach Anspruch 19, **dadurch gekennzeichnet, daß** die Verbindung zwischen dem Haubenelement (14) und dem Kondensatauffangelement (28, 128) thermisch isolierend ist.

21. Bausatz nach Anspruch 19 oder 20, **dadurch gekennzeichnet, daß** zwischen dem oberen Ende des Haubenelements (14) und dem Kondensatauffangelement (28, 128) eine Luftzutrittsöffnung (67, 167) vorgesehen ist.

22. Bausatz nach einem der Ansprüche 19 bis 21, **dadurch gekennzeichnet, daß** der Außenrohrabschnitt (16) mit am Außenumfang des Abgasrohrs (22, 122) anliegenden Zentrierlappen (82) ausgebildet ist.

## Claims

1. A cowl (12, 112) for a waste-gas pipe (22, 122) of a heating installation, comprising a screen element (26, 126, 34, 134) disposed at least partly above the waste-gas pipe (22, 122) and defining at least one waste-gas outlet opening (62) and also comprising a condensate collecting element (28, 128) disposed outside the waste-gas pipe (22, 122) underneath the screen element (26, 126, 34, 134), the top of the element being formed with a surface (32, 132) for collecting condensate (64, 164) formed on the screen element (34, 134), wherein the condensate collecting element (28, 128) comprises a heat-exchange part (42) and is heated by the waste gases conveyed through the heat-exchange part (42) during operation,
**characterised in that**
the heat-exchange part (42) is a part integral with the condensate collecting element (28, 128).

2. A cowl (12, 112) according to claim 1,
**characterised in that** the heat exchange part (42) is formed by an upwardly projecting collar.

3. A cowl (12, 112) according to claim 2,
**characterised in that** the collar (42) continues downwards in the form of a cylindrical portion (44) which on the inside abuts the top end of the waste-gas pipe (22).

4. A cowl (12, 112) according to any of the preceding claims, **characterised in that** the condensate collecting element (28, 128) has at least one electric heating element (30).

5. A cowl (12, 112) according to any of the preceding claims, **characterised in that** the condensate collecting element (28, 128) is made of a material which is a good conductor of heat, such as a metal.

6. A cowl (12, 112) according to any of the preceding claims, **characterised in that** the condensate collecting element (28, 128) is thermally coupled to the waste-gas pipe (22, 122).

7. A cowl (12, 112) according to any of the preceding claims, **characterised in that** the screen element (34, 134) is thermally coupled to the condensate collecting element (28, 128).

8. A cowl (12, 112) according to any of the preceding claims, **characterised in that** the condensate collecting element (28, 128) comprises at least one temperature sensor (31).

9. A cowl (12) according to any of the preceding claims, **characterised in that** the condensate collecting element (28) conveys the condensate (64) inwards into the waste-gas pipe (22).

10. A cowl (12) according to claim 9, **characterised in that** the condensate collecting surface (32) slopes inwardly and terminates in the waste-gas pipe (22), either directly or via at least one connecting duct (40).

11. A cowl (12) according to claims 2 and 10,
**characterised in that** the collar (42) of the condensate collecting element (28) has inlet openings (40).

12. A cowl (112) according to any of claims 1 to 8,
**characterised in that** the condensate collecting element (128) conveys the condensate (164) outwards.

13. A cowl (12, 112) according to any of the preceding claims, **characterised in that** the screen element (26, 126, 34, 134) contains a radially outwardly projecting side wall (34, 134), and the condensate collecting surface (32, 132) collects condensate (164) dripping off the side wall (34, 134).

14. A cowl (112) according to any of the preceding claims, **characterised in that** the screen element (126, 134) contains a roof element (126), and the condensate collecting surface (132) collects condensate (164) dripping off the roof element (126).

15. A kit for a roof duct (10) of a waste-gas pipe (22, 122) of a heating installation, comprising a cowl (12, 112) according to any of the preceding claims and having a condensation collecting element (28, 128), a separate side wall (34, 134) for connecting thereto, and a roof element (26, 126) separately connectable to the side wall (34, 134) and/or the condensate collecting element (28, 128), wherein optionally a condensate collecting element (28) and condensate discharge means can be inserted on the inside or a condensate collecting element (128) and condensate discharge means can be inserted on the outside of the waste-gas pipe (22) and wherein the roof element (26, 126) can optionally be omitted.

16. A kit according to claim 15, **characterised in that** a thermally insulated waste-gas pipe portion (212a, 212b, 212c) is optionally insertable at least in the region outside the roof.

17. A kit according to claim 16, **characterised in that** the exhaust-gas pipe portion (212c) is double-walled.

18. A kit according to claim 16, **characterised in that** the exhaust-gas pipe portion (212a, 212b) comprises a foamed insulating layer (216a, 216b), and is preferably surrounded by the insulating layer (216a).

19. A kit according to any of claims 16 to 18,
**characterised in that** a first outer pipe portion (16) is provided for conveying fresh air (66) in the annular space between the waste-gas pipe portion (22, 122) and the outer pipe portion (16), and the top end of a downwardly open hood element (14) is connected to the condensate collecting element (28, 128).

20. A kit according to claim 19, **characterised in that** the connection between the hood element (14) and the condensate collecting element (28, 128) is thermally insulating.

21. A kit according to claim 19 or 20,
**characterised in that** an air admission opening (67, 167) is provided between the condensate collecting element (28, 128) and the top end of the hood element (14).

22. A kit according to any of claims 19 to 21,
**characterised in that** the outer pipe portion (16) is formed with centring lugs (82) adjoining the outer periphery of the waste-gas pipe (22, 122).

## Revendications

1. Chapeau (12, 112) pour un tube de gaz d'échappement (22, 122) d'une installation de chauffage, avec un élément formant écran (26, 126, 34, 134), disposé, au moins par zones, au-dessous du tube de gaz d'échappement (22, 122) et fixant au moins une ouverture de sortie de gaz d'échappement (62), et avec un élément de captage de condensat (28, 128) disposé au-dessous de l'élément formant écran (26, 126, 34, 134), à l'extérieur du tube de gaz d'échappement (22, 122), élément de captage dont la face supérieure est réalisée avec une surface de captage de condensat (32, 132) pour du condensat (64, 164) formé sur l'élément formant écran (34, 134), l'élément de captage de condensat (28, 128) présentant une partie échangeuse de chaleur (42) et étant chauffé pendant le fonctionnement par les gaz d'échappement passés par la partie échangeuse de chaleur (42).
**caractérisé en ce que**,
la partie échangeuse de chaleur (42) constitue, avec la partie de captage de condensat (28, 128), un élément monopièce.

2. Chapeau (12, 112) selon la revendication 1,
**caractérisé en ce que** la partie échangeuse de chaleur (42) est constituée par une collerette faisant saillie vers le haut.

3. Chapeau (12, 112) selon la revendication 2,
**caractérisé en ce que** la collerette (42) se prolonge vers le bas, en un tronçon (44) cylindrique, qui repose sur la face intérieure, à l'extrémité supérieure du tube de gaz d'échappement (22).

4. Chapeau (12, 112) selon l'une des revendications précédentes,
**caractérisé en ce que**,
l'élément de captage de condensat (28, 128) est muni d'au moins d'un élément de chauffage (30) électrique.

5. Chapeau (12, 112) selon l'une des revendications précédentes,
**caractérisé en ce que**,
l'élément de captage de condensat (28, 128) est constitué d'un matériau bon conducteur de la chaleur, tel que du métal.

6. Chapeau (12, 112) selon l'une des revendications précédentes,
**caractérisé en ce que**,
l'élément de captage de condensat (28, 128) est couplé thermiquement au tube de gaz d'échappement (22, 122).

7. Chapeau (12, 112) selon l'une des revendications précédentes,
**caractérisé en ce que**,
l'élément formant écran (34, 134) est couplé thermiquement à l'élément de captage de condensat (28, 128).

8. Chapeau (12, 112) selon l'une des revendications précédentes,
**caractérisé en ce que**,
l'élément de captage de condensât (28, 128) est muni d'au moins un capteur de température (31).

9. Chapeau (12, 112) selon l'une des revendications précédentes,
**caractérisé en ce que**,
l'élément de captage de condensat (28, 128) dirige le condensât (34) vers l'intérieur, dans le tube de gaz d'échappement (22).

10. Chapeau (12) selon la revendication 9, **caractérisé en ce que** la surface de captage de condensat (32) s'étend obliquement vers l'intérieur et débouche, directement sur au moins par l'intermédiaire d'un canal de liaison (40), dans le tube d'échappement (22).

11. Chapeau (12) selon les revendications 2 et 10,
**caractérisé en ce que** la collerette (42) de l'élément de captage de condensat (28) présente des ouvertures d'entrée (40).

12. Chapeau (112) selon l'une des revendications 1 à 8,
**caractérisé en ce que** l'élément de captage de condensat (28) dirige le condensat (164) vers l'extérieur.

13. Chapeau (12, 112) selon l'une des revendications précédentes, **caractérisé en ce que** l'élément formant écran (26, 126, 34, 134) contient une paroi latérale (34, 134) faisant saillie radialement vers l'extérieur, et **en ce que** la surface de captage du condensat (32, 132) capte du condensat (164) s'égouttant depuis la paroi latérale (34, 134).

14. Chapeau (112) selon l'une des revendications précédentes, **caractérisé en ce que** l'élément formant écran (126, 134) contient un élément de toiture (126), et **en ce que** la surface de captage de condensat (132) capte du condensat (164) s'égouttant depuis l'élément de toiture (126).

15. Jeu d'élément pour une traversée de toiture (10) d'un tube de gaz d'échappement (22, 122) d'une installation de chauffage, comprenant un chapeau (12, 112) selon l'une des revendications précédentes, avec un élément de captage de condensat (28, 128), une paroi latérale (34, 134) séparée, susceptible d'être reliée à celui-ci, et un élément de toiture (26, 126) susceptible d'être relié séparément à la paroi latérale (34, 134) et/ou à l'élément de captage de condensat (28, 128), ou au choix un élément de captage de condensat (28) muni d'une conduite d'évacuation vers l'intérieur ou, un élément de captage de condensat (128), muni d'une conduite d'évacuation de condensat vers l'extérieur, est susceptible d'être inséré, et où au choix l'élément de toiture (26, 126) peut être supprimé.

16. Jeu d'élément selon la revendication 15, **caractérisé en ce qu'**au moins dans la zone située au-dessus de la toiture, au choix un tronçon de tube de gaz d'échappement (212a, 212b, 212c), isolé thermiquement, est susceptible d'être inséré.

17. Jeu d'élément selon la revendication 16, **caractérisé en ce que** le tronçon de tube de gaz d'échappement (212c) est à double paroi.

18. Jeu d'élément selon la revendication 16, **caractérisé en ce que** le tronçon de tube de gaz d'échappement (212a, 212b) présente une couche isolante (216a, 216b) constituée d'un matériau alvéolaire, de préférence enveloppé par la couche isolante (216a).

19. Jeu d'élément selon l'une des revendications 15 à 18,
**caractérisé en ce qu'**un premier tronçon de tube extérieur (16) est prévu pour guider de l'air frais (66) dans l'espace annulaire existant entre le tronçon de gaz d'échappement (22, 122) et le tronçon de tube extérieur (16), et **en ce que** l'extrémité supérieure d'un élément de hotte ou de capot (14) ouvert vers le bas est relié à l'élément de captage de condensat (28, 128).

20. Jeu d'élément selon la revendication 19, **caractérisé en ce que** la liaison entre l'élément de hotte ou capot (14) et l'élément de captage de condensat (28, 128) est isolante thermiquement.

21. Jeu d'élément selon les revendications 19 ou 20,
**caractérisé en ce qu'**une ouverture d'arrivée d'air (67, 167) est prévue entre l'extrémité supérieure de l'élément formant hotte (14) et l'élément de captage de condensat (28, 128).

22. Jeu d'élément selon l'une des revendications 19 à 21,
**caractérisé en ce que** le tronçon de tube extérieur (16) est réalisé avec des languettes de centrage (82) s'appliquant sur la paroi extérieure du tube de gaz d'échappement (22, 122).
